# EUROPEAN PATENT APPLICATION

(11) **EP 2 339 824 A1**
(43) Date of publication of application: **29.06.2011**
(21) Application number: 10164348.4
(22) Date of filing: 28.05.2010
(51) Int. Cl.: H04N 5/00, H04N 7/173

(54) **Display device, control method thereof, contents supplying system, and contents supplying method thereof**

(30) Priority: 23.11.2009 KR 20090113094
(71) Applicant: Samsung Electronics Co., Ltd., Suwon-si, Gyeonggi-do (KR)
(72) Inventor: Kim, Dae-hyun, Gyeonggi-do (KR); Lee, Chang-soo, Seoul (KR); Lee, Sang-hee, Seoul (KR); Yoon, Yeo-ri, Gyeonggi-do (KR)
(74) Representative: Hewett, Jonathan Michael Richard

(57) **Abstract**

A display device, a control method thereof, a contents supplying system, and a contents supplying method thereof smoothly executing contents are disclosed. The display device includes: a display unit which displays a video; a user input unit which receives an input of a user; a communication unit which communicates with a first contents supplying server storing a plurality of contents and a second contents supplying server supplying the contents; and a control unit which displays a contents menu including contents information related to the plurality of contents in the display unit. The control unit demands supplying of contents selected among the plurality of contents depending on an input of a user, to the second contents supplying server, and receives the selected contents transmitted from the first contents supplying server to the second contents supplying server from the second contents supplying server by streaming data.

## Description

The present invention relates to a display device, a control method thereof, a contents supplying system and a contents supplying method thereof. More particularly, the exemplary embodiments relate to a display device, a control method thereof, a contents supplying system and a contents supplying method thereof for smoothly executing contents.

A digital electronic industry has rapidly developed by development of hardware and software technologies and propagation of the Internet. Platform and broadcasting technology lead the electronic industry with propagation of a high performance personal computer (PC), advent of a broadband network and digital broadcasting. Under this environment, a podcasting service, a broadcasting service, a contents service, etc. have become well known. The podcasting service is a service where if a podcasting exclusive use program is installed in a PC supporting an Internet connection and a preferable blog of a podcasting mini homepage type is registered, and when a new broadcasting is added, an audio file (MP3, etc.) is automatically downloaded in the PC to be heard on the PC. Or, the audio file can be loaded again in a portable device, such as a MP3 player to be heard by a user. Since it is necessary to download and store an audio file, etc., to use the podcasting service, a large capacity of memory is generally used. Accordingly, in the case of a small memory capacity device such as a TV, etc., since the number of files to be stored is restrictive, it is difficult to supply a user with ease of service if a user uses a service such as podcasting through the TV, etc.

Accordingly, one or more exemplary embodiments provide a display device, a control method thereof, a contents supplying system and a contents supplying method thereof enabling smooth contents execution, even though the memory capacity is small.

The foregoing and/or other aspects may be achieved by providing a display device, including: a display unit which displays a video; a user input unit which receives an input of a user; a communicating unit which communicates with a first contents supplying server storing a plurality of contents and a second contents supplying server supplying the contents; and a control unit which displays a contents menu including contents information related to the plurality of contents, in the display unit, demands supplying of contents selected depending on an input of a user among the plurality of contents to the second contents supplying server, and receives the selected contents transmitted from the first contents supplying server to the second contents supplying server from the second contents supplying server by streaming data.

The control unit may supply identifying information relating to the selected contents, to the second contents supplying server.

The control unit may transmit user identification information to the second contents supplying server, for the second contents supplying server to receive the contents corresponding to the user.

The apparatus may include a signal receiving unit which receives a broadcasting signal including a video, and a signal processing unit which processes a broadcasting signal received by the signal receiving unit, so that a video can be displayed based on the broadcasting signal.

The contents information may include a web address of the contents.

The contents menu may be classified with the plurality of contents, as a group, to display together with information of the group.

The contents menu may include a user preferred contents menu related to contents which a user prefers.

The contents menu may be classified with the plurality of contents which the user prefers to display as a group.

The control unit may update the contents information.

Another exemplary embodiment is to provide a control method of a display device, including: displaying a contents menu including contents information related to a plurality of contents stored in a first contents supplying server; selecting at least one contents among the plurality of contents depending on an input of a user; demanding a supplying of the selected contents to a second contents supplying server; and receiving the selected contents transmitted from the first contents supplying server to the second contents supplying server, from the second contents supplying server, by streaming data.

The receiving may include supplying an identifying information of the selected contents to the second contents supplying server.

The receiving may include transmitting an identifying information of the user to the second contents supplying server, for the second contents supplying server to receive the contents corresponding to the user.

The control method of a display device may include receiving a broadcasting signal, and processing the broadcasting signal so that a video can be displayed based on the broadcasting signal.

The displaying may include a web address of the contents.

The displaying may include classifying the plurality of contents as a group, and displaying the contents together with information of the group.

The displaying may include displaying a user preferred contents menu related to contents which a user prefers.

The contents menu may be classified with the plurality of contents which the user prefers, as a group, to display.

The displaying may include displaying updated contents information.

Another exemplary embodiment is to provide a contents supplying system, including: a first contents supplying server which stores a plurality of contents; a second contents supplying server which receives at least one contents corresponding to a selection of a user among the plurality of contents from the first contents supplying server, and supplies the contents which correspond to a demand of the user; and a display device which displays a contents menu including contents information related to the plurality of contents, in a display unit, and receives at least one contents selected among the plurality of contents, depending on an input of the user, from the second contents supplying server by a streaming type.

Another exemplary embodiment is to provide a contents supplying method, including: displaying a contents menu including contents information related to a plurality of contents in a display device; transmitting at least one contents selected from among the plurality of contents, depending on an input of a user, from a first contents supplying server to a second contents supplying server; and receiving the selected contents transmitted from the first contents supplying server to the second contents supplying server from the second contents supplying server, by streaming data in the display device, depending on a demand of the user.

The above and/or other aspects will become apparent and more readily appreciated from the following description of the exemplary embodiments, taken in conjunction with the accompanying drawings, in which:
FIG. 1 illustrates a contents supplying system including a display device according to an exemplary embodiment;
FIG. 2 illustrates a configuration of the display device according to the exemplary embodiment;
FIG. 3A illustrates a contents group which the display device supplies, according to the exemplary embodiment;
FIG. 3B illustrates contents included in a contents group which the display device supplies according to the exemplary embodiment;
FIG. 3C illustrates a user preferred contents group which the display device supplies according to the exemplary embodiment;
FIG. 4 is a flowchart illustrating an operation of the display device according to the exemplary embodiment; and
FIG. 5 is a flowchart illustrating an operation of a contents supplying system including the display device according to the exemplary embodiment.

Below, exemplary embodiments will be described in detail with reference to accompanying drawings so as to be easily realized by a person having ordinary knowledge in the art. The present invention embodiments may be embodied in various forms without being limited to the exemplary embodiments set forth herein. Descriptions of well-known parts are omitted for clarity, and like reference numerals refer to like elements throughout.

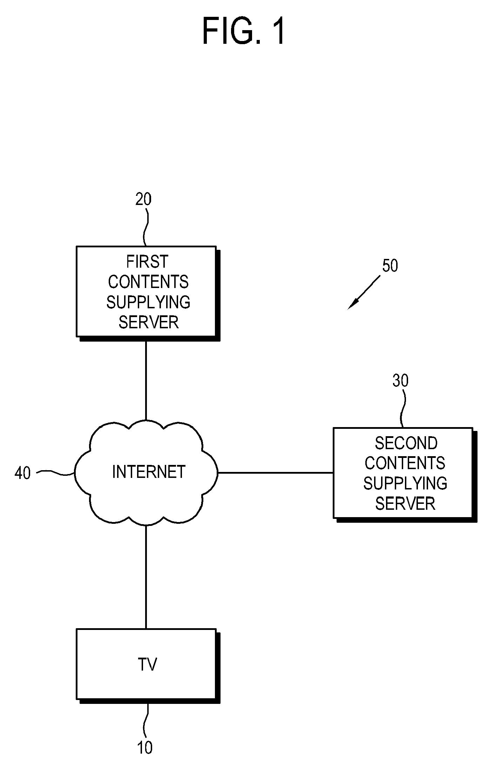

FIG. 1 illustrates a contents supplying system 50 including a display device 10 according to an exemplary embodiment. In FIG. 1, the display device 10 according to the present exemplary embodiment is exemplary embodied by a TV 10.

The TV 10 may be connected with a first contents supplying server 20 and a second contents supplying server 30 through a network such as the Internet 40. Here, the first contents supplying server 20 and the second contents supplying server 30 are examples of various servers to which the TV 10 can be connected.

The TV 10 may display a contents menu including a contents information related to a plurality of contents. A user may view a displayed contents menu and select desired contents. The contents information may include a web address; and for this, the TV 10 may store a web address of contents. Also, if contents are updated, the TV 10 may display a web address of the updated contents. The web address of the updated contents may be highlighted so that a user can easily confirm the web address.

If a user selects specific contents, the first contents supplying server 20 capable of storing a plurality of contents may supply the selected contents. Here, if the user is supplied with a podcasting server by using TV 10, the first contents supplying server 20 may be a news server supplying a news or a music server supplying music. Contents may include at least one of a video, audio and data.

The first contents supplying server 20 transmits contents by a download of data. Accordingly, in order to receive contents from the first contents supplying server 20 to be executed, the contents should be downloaded and stored. It is difficult for the TV 10 to download contents because the memory capacity of the TV 10 is small. Accordingly, the first contents supplying server 20 transmits contents which the user selects to the second contents supplying server 30. That is, the user downloads the selected contents not in the TV 10, but in the second contents supplying server 30 which stores the contents received from the first contents supplying server 20. If new contents are updated, the first contents supplying server 20 transmits the updated contents to the second contents supplying server 30.

The second contents supplying server 30 may transmit contents by streaming data. If a user demands contents selected in the first contents supplying server 20, the contents are transmitted to the second contents supplying server 30. The second contents supplying server 30 then transmits the demanded contents to the TV 10 by streaming data.

The user may receive selected contents by transmitting an identifying information of the selected contents or transmitting user identifying information. The identifying information of the contents may include a title of the contents, the date on which the contents are selected, a format of the contents. The user identifying information may include an ID and a password of the user, etc. In the case of the user identifying information, an ID and a password of a user are stored in the second contents supplying server 30, and the ID and the password are confirmed when the user connects to the second contents supplying server 30, and contents related to the user are transmitted.

The second contents supplying server 30 stores a contents menu including contents information related to each of a plurality of users, and when identification of a user is completed, the second contents supplying server 30 may transmit a contents menu to be displayed to the user. TV 10 does not store the web address of the contents separately, and displays the contents menu which the second contents supplying server 30 supplies.

If there are a plurality of contents supplying servers supplying contents which a user selects, like the first contents supplying server 20, the second contents supplying server 30 receives and stores the contents which the user selects from the plurality of contents supplying servers. Since the second contents supplying server 30 stores the identifying information of the user, the second contents supplying server 30 manages the contents which correspond to each user. If the contents are updated, the second contents supplying server 30 may highlight this so that the user can easily confirm the updated contents.

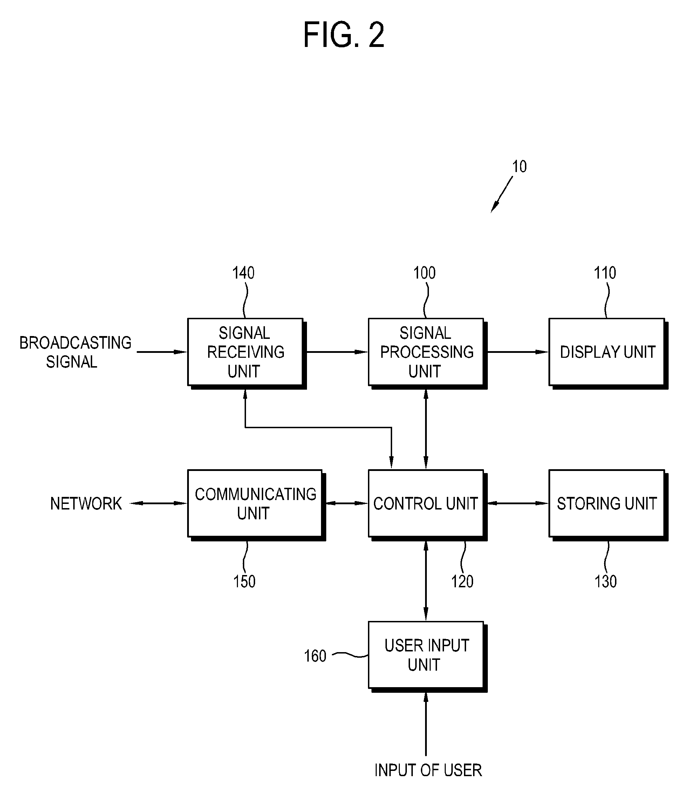

FIG. 2 illustrates a configuration of the display device 10 according to the exemplary embodiment. Referring to FIG. 2, the display device 10 according to the present exemplary embodiment may include a signal receiving unit 140, a signal processing unit 100, a display unit 110, a control unit 120, a storing unit 130, a communicating unit 150 and a user input unit 160.

The signal receiving unit 140 receives a broadcasting signal, including a video, from an outside source. A broadcasting signal received by the signal receiving unit 140 includes a broadcasting signal such as a digital television (DTV) signal, a cable broadcasting signal, etc. In this case, the signal receiving unit 140 may receive, by tuning a broadcasting signal of a channel which a user selects, depending on a control of the control unit 120.

The signal processing unit 100 performs predetermined signal processing so that a video included in a broadcasting signal received by the signal receiving unit 140 can be displayed on display unit 110. The signal processing performed by the signal processing unit 100 includes decoding related to a broadcasting signal, image enhancing, scaling, etc. Also, the signal processing unit 100 may perform demultiplexing, respectively dividing a broadcasting signal, an audio signal and a data signal from a broadcasting signal received through the signal receiving unit 140, a decoding processing related to an audio signal and a data signal, etc.

The display unit 110 displays a video based on a broadcasting signal processed by the signal processing unit 100. The display unit 100 may display a data information included in a data signal processed by the signal processing unit 100. Also, the display unit 110 may display a contents menu including a contents information related to a plurality of contents. That is, the display unit 110 may display a contents group classifying contents and related contents. A web address of a server supplying the contents may be displayed together with the contents.

Storing unit 130 may be embodied by a non volatile memory such as a flash memory, a hard disk, etc., and data or information related to the display device 10 may be stored in the storing unit 130. In the present exemplary embodiment, the storing unit 130 may store a web address of a server supplying various contents such as the first contents supplying server 20.

The user input unit 160 is for receiving an input of a user, and may be exemplarily embodiment by a remote controller enabling a remote manipulation, an operating panel provided to a main body (not shown) of the display device 10, etc. An input of a user received by the user input unit 160 is transmitted to control unit 120.

Communicating unit 150 communicates with first contents supplying server 20 and second contents supplying server 30 through a network such as the Internet, etc., and may employ wire and wireless communications based on a transmission control protocol/Internet protocol (TCP/IP). The communicating unit 150 communicates depending on a control of control unit 120.

Control unit 120 generally controls the other elements of display device 10 such as signal processing unit 100, etc. Control unit 120, according to the present exemplary embodiment, executes an executing program for executing received contents. In case of a media file, the executing program may be a replaying program, and in case of a game, a data information, etc.. The executing program may be a program capable of displaying related information.

Control unit 120, according to the present exemplary embodiment, although not shown in detail, may include a control program for executing an operation as described above, in a non volatile memory such as a flash memory, etc. Storing this control program, a random access memory (RAM), as a main memory for loading all or a part of a corresponding control program for executing the control program, and a microprocessor such as a central processing unit (CPU) is used to execute a control program loaded in the main memory.

If a user views a contents menu and selects specific contents, control unit 120 transmits the specific contents selected to a contents supplying server so that the selected contents can be executed. For example, if a user selects specific contents supplied in the first contents supplying server 20, the control unit 120 transmits the first contents supplying server 20 that the user selects the specific contents. Then, the second contents supplying server 30 is connected, and the user selected specific contents are demanded. When the contents are transmitted to the second contents supplying server 30, the contents are executed. At this time, control unit 120 may transmit to the second contents supplying server 30 an identifying information of the selected contents, or may transmit identifying information of the user.

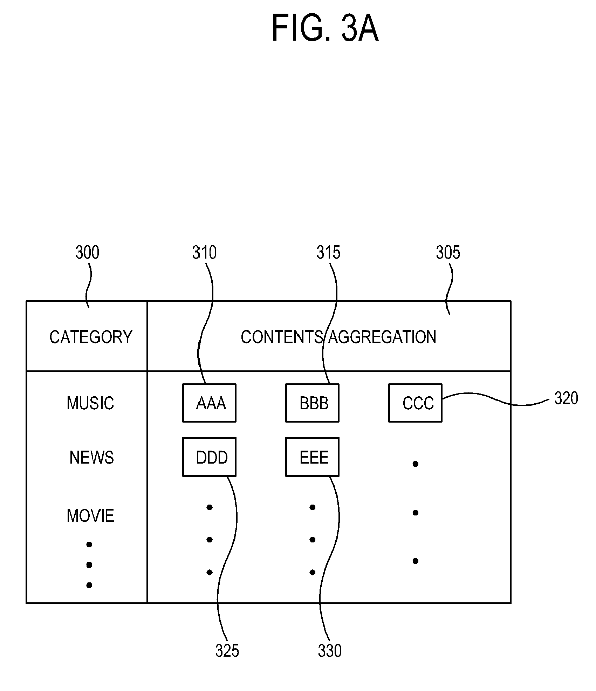

FIG. 3A illustrates a contents group which the display device 10 supplies according to the exemplary embodiment.

As shown in FIG. 3A, the display device 10, according to the present exemplary embodiment, may supply a graphic user interface (GUI). If a user enters a contents mode of the display device 10 to view music, a movie, etc., the control unit 120 creates a contents aggregation 305 in which contents groups 310 to 330, classifying related contents by a category 300, are gathered to be displayed. For example, a contents group corresponding to music in the category 300 is AAA 310, BBB 315 and CCC 320, and a content group corresponding to a news is DDD 325 and EEE 330. Also, if a new contents supplying server is generated, the control unit 120 may classify contents supplied from the new server by the category 300, and may add a new contents group to the contents aggregation 305. At this time, the newly added contents group may be highlighted so that a user can easily confirm the newly added contents group. Also, control unit 120 may cause a web address of the contents supplying server supplying each contents to be displayed, together with each contents group 310 to 330.

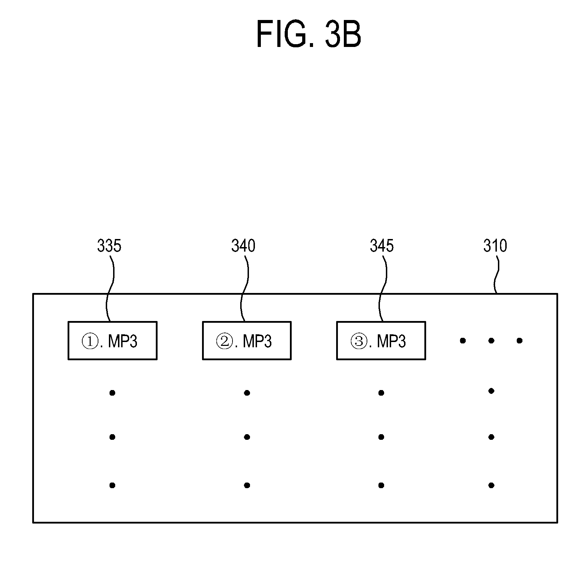

FIG. 3B illustrates contents included in a contents group which the display device 10 supplies, according to the exemplary embodiment.

If a user selects a specific contents group included in contents aggregation 305, the control unit 120 causes contents included in the corresponding contents group to be displayed. For example, if a user selects the AAA 310, since the AAA 310 includes contents corresponding to music, various music contents such as a first MP3 335, a second MP3 340, a third MP3 345, etc. are displayed. In this time, the control unit 120 may cause a web address of a contents supplying server supplying each contents, to be displayed together with each of the contents.

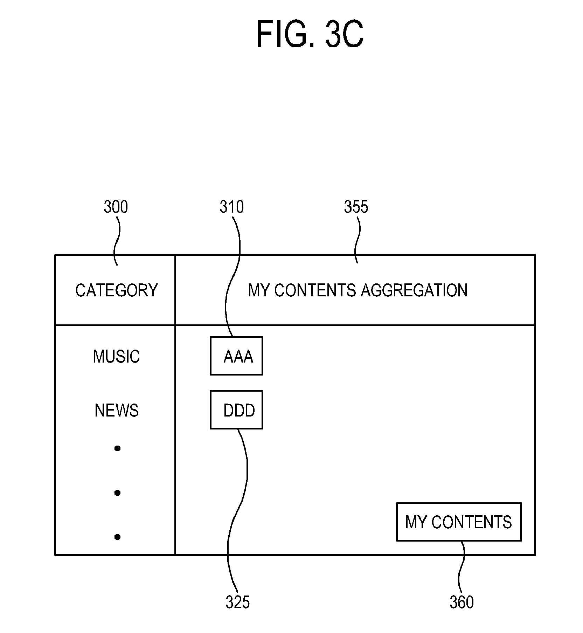

FIG. 3C illustrates a user preferred contents group which the display device 10 according to the exemplary embodiment supplies.

Control unit 120 may supply a user preferable GUI capable of separately supplying a contents group and contents preferred by a user among various contents groups and contents. Referring to FIG. 3C, if a user wants to distinguish a specific contents group from other contents groups, control unit 120 moves a contents group which the user selects from the contents aggregation 305 to a MY contents aggregation 355. For example, if the user desires contents groups AAA 310 and DDD 325 to be separately managed, AAA 310 and DDD 325 are classified by the category 300, and are moved from the contents aggregation 305 to the MY contents aggregation 355. At this time, a web address of the contents supplying server may be displayed together with the contents.

Control unit 120 may separately supply only contents which a user prefers. If there are contents which a user prefers among various contents, a contents group such as MY contents 360 may be supplied. If a user uses various contents and wants to separately manage them, the control unit 120 moves contents which the user selects to the MY contents 360. Also, control unit 120 may cause the MY contents 360 to be displayed in the MY contents aggregation 355 together with a content group which the user selects. The user can easily manage a contents group and contents which the user prefers through the MY contents aggregation 355.

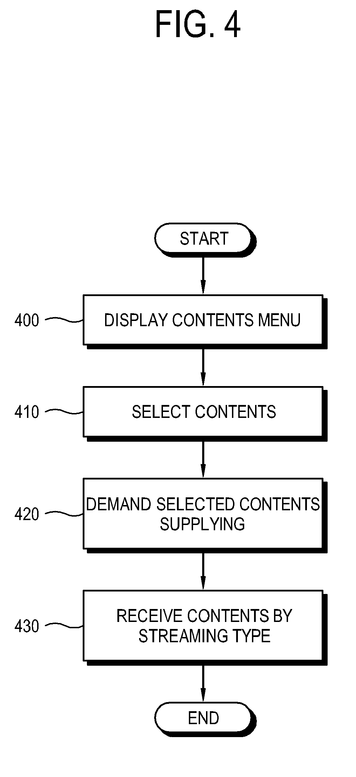

FIG. 4 is a flowchart illustrating an operation of the display device 10 according to the exemplary embodiment.

Control unit 120 causes a contents menu including a contents information related a plurality of contents stored in the first contents supplying server 20, to be displayed in display unit 110 (step 400). If a user views the contents menu and selects specific contents (step 410), the control unit 120 demands that the selected contents be transmitted to the second contents supplying server 30 (step 420). Then, control unit 120 receives the selected contents from the second contents supplying server 30 by streaming data; the selected contents being transmitted from first contents supplying server 20 to second contents supplying server 30 (step 430).

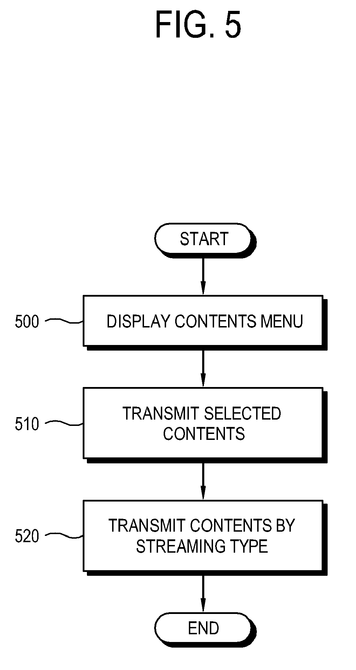

FIG. 5 is a flowchart illustrating an operation of a contents supplying system 50 including display device 10 according to the exemplary embodiment.

Display device 10 displays a contents menu including a contents information related to a plurality of contents so that a user can view the contents menu and select specific contents (step 500). If the user views the contents menu and selects specific contents, the first contents supplying server 20 transmits the selected contents to the second contents supplying server 30 (step 510). Then, second contents supplying server 30 stores the transmitted contents, and then, if there is a demand for the selected contents in the display device 10, the second contents supplying server 30 transmits the demanded contents to the display device 10 by streaming data (step 520).

As described above, according to the present exemplary embodiments, although a TV memory capacity is small, various contents supplied from an outside source can be smoothly executed.

Also, a user can be provided with a GUI allowing the user to manage preferred contents and contents group so that the user can conveniently manage contents.

Although a few exemplary embodiments have been shown and described, it will be appreciated by those skilled in the art that changes may be made in these exemplary embodiments without departing from the principles of the invention, the scope of which is defined in the appended claims.

## Claims

1. A display device, comprising:
a first contents supplying server storing a plurality of contents;
a second contents supplying server supplying the contents;
a communication unit which communicates with the first contents supplying server storing a plurality of contents and the second contents supplying server supplying the contents; and
a control unit which is configured to display a contents menu including contents information related to the plurality of contents in a display unit, said control unit demands supplying of contents selected by a user from among the plurality of contents, from the first contents supplying server to the second contents supplying server, and said control unit receives, from the second contents supplying server, the selected contents transmitted from the first contents supplying server to the second contents supplying server, by streaming data.

2. The display device of claim 1, further comprising: a display unit which displays a video.

3. The display device of claim 1, further comprising: a user input unit which receives an input from a user.

4. The display device according to claim 1, wherein the control unit supplies an identifying information of the selected contents to the second contents supplying server.

5. The display device according to claim 1, wherein the control unit transmits an identifying information of the user to the second contents supplying server to receive the contents corresponding to the user.

6. The display device according to claim 1, further comprising:
a signal receiving unit which receives a broadcasting signal comprising a video, and
a signal processing unit which processes a broadcasting signal received by the signal receiving unit so that a video can be displayed based on the broadcasting signal.

7. The display device according to claim 1, wherein the contents information includes a web address of the contents.

8. The display device according to claim 1, wherein the contents menu is classified with the plurality of contents, as a group, to display together with information of the group.

9. The display device according to claim1, wherein the contents menu comprises a user preferred contents menu related to contents which the user prefers.

10. The display device according to claim 9, wherein the contents menu is classified with the plurality of contents which the user prefers to display as a group.

11. The display device according to claim 1, wherein the control unit updates the contents information.

12. A control method of a display device, comprising:
displaying a contents menu including contents information related to a plurality of contents stored in a first contents supplying server;
selecting at least one of said contents from among the plurality of contents, based on an input of a user;
demanding supplying of the selected contents from the first contents supplying server to a second contents supplying server; and
receiving, from the second contents supplying server, the selected contents transmitted from the first contents supplying server to the second contents supplying server, by streaming data.

13. The control method of the display device according to claim 12, wherein the receiving comprises supplying an identifying information of the selected contents to the second contents supplying server.

14. The control method of the display device according to claim 13, wherein the receiving comprises transmitting an identifying information of the user to the second contents supplying server to receive the contents corresponding to the user.

15. The control method of the display device according to claim 12, further comprising:
receiving a broadcasting signal, and
processing the broadcasting signal so that a video can be displayed based on the broadcasting signal.

## Amended claims

### Amended claims in accordance with Rule 137(2) EPC.

**1.** A display system, comprising:
a display device (10) having a control unit (120) and a communication unit (150);
a first contents supplying server (20) storing a plurality of contents; and
a second contents supplying server (30) arranged to supply the contents to the display device;
in which the communication unit is arranged to communicate with the first contents supplying server and the second contents supplying server; and
the control unit is configured to control the display device to display a contents menu including contents information related to the plurality of contents stored at the first contents supplying server, said control unit arranged to demand the supply of contents, selected by a user from the displayed contents information, from the first contents supplying server to the second contents supplying server,
wherein the second contents supplying server is arranged to stream the selected contents to the control unit.

**2.** The display system of claim 1, in which the display device (10) is arranged to display a video.

**3.** The display system of claim 1 or claim 2, in which the display device (10) further comprises a user input unit (160) which receives an input from a user.

**4.** The display system according to any one of the preceding claims, wherein the control unit (120) supplies identifying information of the selected contents to the second contents supplying server (30).

**5.** The display system according to any one of the preceding claims, wherein the control unit (120) transmits an identifying information of the user to the second contents supplying server (30) to receive the contents corresponding to the user.

**6.** The display system according to any one of the preceding claims, in which the display device (10) further comprises:
a signal receiving unit (140) which receives a broadcasting signal comprising a video, and
a signal processing unit (150) which processes a broadcasting signal received by the signal receiving unit so that a video can be displayed based on the broadcasting signal.

**7.** The display system according to any one of the preceding claims, wherein the contents information includes a web address of the contents.

**8.** The display system according to any one of the preceding claims, wherein the contents menu is classified with the plurality of contents, as a group, to display together with information of the group.

**9.** The display system according to according to any one of claims 1 to 7, wherein the contents menu comprises a user preferred contents menu related to contents which the user prefers.

**10.** The display system according to claim 9, wherein the contents menu is classified with the plurality of contents which the user prefers to display as a group.

**11.** The display system according to any one of the preceding claims, wherein the control unit (120) updates the contents information.

**12.** A control method of a display system, comprising:
displaying a contents menu including contents information related to a plurality of contents stored in a first contents supplying server (20);
selecting at least one of said contents from among the plurality of contents, based on an input of a user;
demanding supplying of the selected contents from the first contents supplying server to a second contents supplying server (30); and
receiving, from the second contents supplying server, the selected contents transmitted from the first contents supplying server to the second contents supplying server, by streaming data.

**13.** The control method of the display system according to claim 12, wherein the receiving comprises supplying an identifying information of the selected contents to the second contents supplying server (30).

**14.** The control method of the display system according to claim 13, wherein the receiving comprises transmitting an identifying information of the user to the second contents supplying server (30) to receive the contents corresponding to the user.

**15.** The control method of the display system according to any one of claims 12 to 14, further comprising:
receiving a broadcasting signal, and
processing the broadcasting signal so that a video can be displayed based on the broadcasting signal.
